(19) Europäisches Patentamt
European Patent Office
Office européen des brevets

(11) **EP 1 918 682 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(51) Int Cl.:
***G01F 1/696*** (2006.01)        ***G01F 1/698*** (2006.01)
***G01F 15/00*** (2006.01)        ***G01F 25/00*** (2006.01)

(21) Anmeldenummer: **07033530.2**

(22) Anmeldetag: **24.10.2007**

(54) **Strömungssensor und Verfahren zur Überprüfung und zum Betrieb eines solchen Strömungssensors**

Flow sensor and method for monitoring and operating such a flow sensor

Capteur d'écoulement et procédé de surveillance et de fonctionnement d'un tel capteur d'écoulement

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.10.2006   DE 102006051690
15.11.2006   DE 102006054105
21.12.2006   AT 21072006**

(43) Veröffentlichungstag der Anmeldung:
**07.05.2008   Patentblatt 2008/19**

(73) Patentinhaber: **Vaillant GmbH
42859 Remscheid (DE)**

(72) Erfinder:
• **Lehminger, Stefan
51067 Köln (DE)**
• **Tomczak, Heinz-Jörg
42549 Velbert (DE)**

(74) Vertreter: **Hocker, Thomas
Vaillant GmbH
Berghauser Strasse 40
42859 Remscheid (DE)**

(56) Entgegenhaltungen:
AT-A4- 503 445            US-A- 5 753 815
US-A1- 2006 005 619

**Beschreibung**

Die Erfindung bezieht sich auf einen Strömungssensor, insbesondere einen Massenstromsensor, auf ein Verfahren zur Funktionsüberprüfung und ein Verfahren zum Betrieb des Strömungssensors in einer Gas-Luft-Verbund-Regelung eines Heizgerätes.

Um eine Gas-Luft-Verbund-Regelung von beispielsweise gasbefeuerten Heizgeräten zu realisieren, kann mit Hilfe eines Massenstromsensors die Menge der Verbrennungsluft und/oder die Gasmenge gemessen werden. Mit Hilfe des gemessenen Signals kann die Verbrennungsqualität entsprechend geregelt werden.

Aus US 2006/0005619 A1 ist ein Strömungssensor mit drei im Strömungsweg parallel geschalteten elektrischen Widerständen, wobei jedem der drei elektrischen Widerstände jeweils ein elektrischer Vorwiderstand seriell vorgeschaltet ist, bekannt.

[weiter mit dem vorletzten Absatz auf Seite 1 der Ursprungsunterlagen]

Nullpunkt und die Steigung des Signals und verfälscht somit das Sensorsignal.

Aus dem europäischen Patent 1 207 347 B1 ist ein Verfahren zum Regeln eines Gasbrenners bekannt, bei dem ein Sensor auf Null-Durchfluss bei einem Sicherheitscheck geprüft wird. Der Sensor ist als Durchflussmesser mit u.a. zwei temperaturempfindlichen Messeinrichtungen und einer Heizeinrichtung ausgebildet. Der Sensor-Sicherheitscheck wird mit ausgeschalteter Heizeinrichtung durchgeführt. Somit kann ohne einen Wärmeeintrag durch die Heizeinrichtung in das vorbeiströmende Medium ein Null-Durchfluss simuliert und der Sensor auf Plausibilität geprüft werden.

Allerdings ist es bei dem aus dem EP 1 207 347 B1 bekannten Verfahren nicht möglich, eine Drift der Heizeinrichtung sicher zu detektieren. Weiterhin ist es nicht möglich, eine Beeinträchtigung eines Wärmeübergangs zwischen der Heizeinrichtung und den temperaturempfindlichen Messeinrichtungen zu erkennen, welche ebenfalls zu einer Fehlmessung führen würden.

Um einen Masseristromsensor in eine Gas-Luft-Verbund-Regelung einbinden zu können, muss das Sensorsignal in regelmäßigen Abständen auf Plausibilität geprüft werden, damit eine eventuelle Sensordrift erkannt werden kann. Da sich im laufenden Betrieb in der Regel definierte Massenströme eines an den Sensor vorbeiströmenden Mediums (Brenngas, Verbrennungsluft oder Brenngas-Luft-Gemisch) nicht oder nur unter bestimmten Umständen ermitteln lassen können, ist ein Sensor-Check auf Plausibilität des Signals bei bisher bekannten Sensoren nur bedingt möglich.

Der Erfindung liegt die Aufgabe zugrunde, ein Strömungssensor, insbesondere ein Massenstromsensor, ein Verfahren zur Funktionsüberprüfung und ein Verfahren zum Betrieb des Strömungssensors in einer Gas-Luft-Verbund-Regelung eines Heizgerätes zu schaffen, bei dem die Plausibilität der Messsignale zuverlässig sichergestellt wird.

Erfindungsgemäß wird dies mit einem Strömungssensor gemäß den Merkmalen des Anspruchs 1, mit einem Verfahren zur Funktionsüberprüfung des Strömungssensors gemäß den Merkmalen des Anspruchs 5 und mit einem Verfahren zum Betrieb des Strömungssensors gemäß Anspruch 8 gelöst.

Weitere vorteilhafte Ausgestaltungen der Erfindung ergeben sich aus den Merkmalen der abhängigen Ansprüche und der Beschreibung. Die Erfindung wird nun anhand der Figuren näher erläutert. Hierbei zeigen

Figur 1    eine Messschaltung mit integriertem Strömungssensor gemäß einer ersten Konfigurationsvariante,

Figur 2    eine Messschaltung mit integriertem Strömungssensor gemäß einer zweiten Konfigurationsvariante und

Figur 3    eine Messschaltung mit integriertem Strömungssensor gemäß einer dritten Konfigurationsvariante.

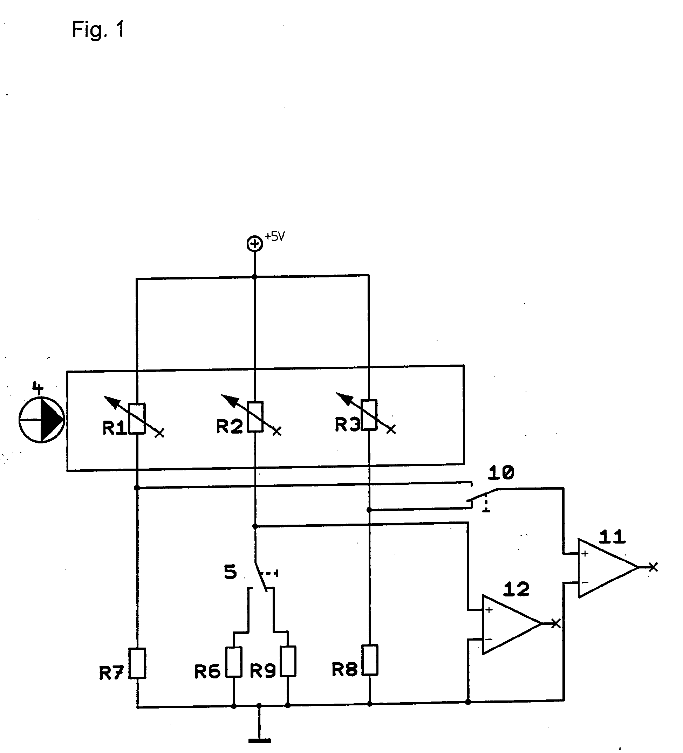

Figur 1 zeigt einen erfindungsgemäßen Strömungssensor, der drei parallel geschaltete temperatursensitive elektrische Widerstände (R1, R2, R3) aufweist. Jedem dieser elektrischen Widerstände ist mindestens ein elektrischer Vorwiderstand wie folgt zugeordnet: dem ersten elektrischen Widerstand (R1) ist der Vorwiderstand (R7) zugeordnet; dem letzten elektrischen Widerstand (R3) entspricht der Vorwiderstand (R8) und dem mittleren Widerstand (R2) werden wahlweise der niederohmige elektrische Vorwiderstand (R9) (auch Shuntwiderstand genannt) oder der hochohmige elektrische Vorwiderstand (R6) zugeschaltet. Die elektrischen Widerstände (R1 und R3) werden nur zur Temperaturermittlung verwendet. Der elektrische Widerstand (R2) kann im Fall des zugeschalteten niederohmigen Vorwiderstand (R9) auch erhitzt werden.

Die elektrischen Widerstände (R1, R2, R3) sind vorzugsweise als PTC - oder NTC - Widerstände ausgebildet. Für die elektrischen Widerstände (R1) und (R3) können optional Thermoelemente und für den mittleren elektrischen Widerstand (R2) Widerstandsdrähte verwendet werden. Der Widerstand (R2) ist in der Regel als Platinwiderstand in Form einer Platinmeanderstruktur ausgeführt.

Um den richtigen Massenstrom ermitteln zu können, sollte vorher die Funktionstüchtigkeit aller relevanten Elemente sichergestellt werden. Dem Messprinzip eines Strömungssensors, insbesondere eines Massenstromsensors, wie in Figur 1 dargestellt, liegt die Energiegleichung zugrunde

$$Q = \dot{m} \cdot cp \cdot \Delta T \qquad\qquad\qquad \text{(Gl. 1)}$$

In dieser Gleichung bedeutet:

Q      := Wärmeeintrag über einen Widerstand des Sensors (R2)
m      := Massenstrom des zu messenden Mediums (z.B. Luft) (4)
$c_p$    := spezifische Wärmekapazität des Mediums (z.B. Luft) und
$\Delta T$    := Temperaturdifferenz zwischen den Temperatur-Messstellen (R1 und R3).

Mittels einer über den elektrischen Widerstand (R2) des Sensors eingebrachten Wärmemenge (Q) kann der Massenstrom des Mediums (4) ermittelt werden, indem die relevanten Temperaturen (T1) und (T3) am Ein- und Austritt des Sensors gemessen werden und die spezifische isobare Wärmekapazität des Mediums (4) ($c_p$) berücksichtigt wird. Die Temperaturerhöhung $\Delta T$ zwischen den temperatursensitiven elektrischen Widerständen (R1, R3) ist bei bekannter Wärmekapazität des zu messenden Mediums (4) ein Maß für den Massenstrom. Die konstante Wärmemenge (Q) erwärmt das Medium auf eine definierte Übertemperatur, die im Falle eines Massenstroms die Temperaturdifferenz (T3-T1) am Sensor beeinflusst.
Befinden sich Schmutzpartikel im vorbeiströmenden Medium (4), so können sich diese auf die temperatursensitive elektrische Widerstände (R1, R2, R3) des Sensors legen. Dies hätte zur Folge, dass einerseits ein oder alle Widerstände (R1, R2, R3) einen verfälschten Wert erfassen könnten und andererseits dass die eingebrachte Wärmemenge vom Sollwert abweichen könnte.
Ebenfalls könnte der Wärmeübergang zwischen dem Widerstand (R2) und einem der Widerstände (R1) oder (R3) behindert werden und dies zu einer Fehlmessung des realen Massenstroms führen.
Um derartige Veränderungen durch Verschmutzung oder aufgrund einer möglichen Sensordrift erkennen zu können, beschreibt die Erfindung eine Methode, mit der die korrekte Funktionsweise jeder der drei elektrischen Widerstände (R1, R2, R3) hinsichtlich plausibler Messwerte sichergestellt werden kann. Weiterhin soll auch der korrekte Wärmeübergang vom Widerstand (R2) zu den Widerständen (R1) und (R3) sichergestellt werden.
Nachfolgend wird ein bevorzugtes Ausführungsbeispiel der Erfindung anhand der Figur 1 näher erläutert.
Wie in Figur 1 gezeigt, wird der elektrische Widerstand (R2) in einem Temperaturmodus betrieben, wenn der Strompfad über den dem Widerstand (R2) zugeordneten hochohmigen Vorwiderstand (R6) durch einen Schalter (5) zugeschaltet wird. Durch den Vorwiderstand (R6) wird der Strom durch den elektrischen Widerstand (R2) so klein, dass es hier von einer vernachlässigbaren Erwärmung des elektrischen Widerstands (R2) auszugehen ist.
Die am elektrischen Widerstand (R1) gemessene Temperatur (T1) wird ermittelt. Hierzu wird ein Schalter (10) in Stellung 3 bewegt. Der elektrische Widerstand (R1) kann nun errechnet werden, indem die Spannung zwischen den Widerständen (R1) und (R7) gemessen wird. Der Strom ergibt sich hierzu aus der Gleichung:

I = Gemessene Spannung / Widerstand bzw. I=U/R.      Gl. 2

Der elektrische Widerstand (R1) kann wie folgt berechnet werden:

R= Spannung / Strom bzw. R=U/I      Gl. 3

Die Temperatur ergibt sich aus der Gleichung:

$$T = \left(\frac{R}{R_0} - 1\right) * \frac{1}{\alpha}$$

Gl. 4

wobei

als $R_0$ der Widerstand des Elementes bei 0°C und

**3**

als α der Temperaturkoeffizient des Elementes

bezeichnet wird.

Im nächsten Schritt wird der Schalter (10) in Stellung 1 gebracht. Dadurch kann die Spannung zwischen dem Widerstand (R3) und dem Vorwiderstand (R8) ermittelt werden. Die Berechnung der Temperatur (T3) erfolgt dann nach der oben genannten Gleichung 4.

Um sicherzustellen, dass der Schalter (10) und ein Operationsverstärker (11) korrekt arbeiten, ist hier ein anderer Widerstandswert als bei (R7) zu wählen, da sich dadurch bei gleicher Temperatur unterschiedliche Ströme ergeben würden. Die Schalterstellung wird dann bei der Berechnung der Temperatur berücksichtigt, so dass bei fehlerhaftem Schalter unterschiedliche Temperaturen errechnet werden würden.

Anschließend wird die Temperatur (T2) am elektrischen Widerstand (R2) wie oben dargestellt bestimmt.

Alle drei ermittelten Temperaturen (T1, T2, T3) werden zur Überprüfung des Sensorssignals miteinander verglichen.

Liegt keine Sensordrift vor, ist davon auszugehen, dass sowohl für ein stehendes als auch für ein strömendes Medium die gemessenen Temperaturen an den Widerständen (R1, R2, R3) in einem vorgegebenen Toleranzbereich gleich sind. Im Fehlerfall aufgrund einer Drift, eines elektrischen Defekts oder eines defekten Schalters werden jeweils unterschiedliche Temperaturen an den elektrischen Widerständen detektiert. Ein funktionaler Fehler des Operationsverstärkers (11), eines oder beider Widerstände (R1, R3), der Schalter (5) oder (10) und/oder des Widerstandes (R2) kann somit ermittelt werden.

Nur wenn die Ergebnisse in einem vorgegebenen Toleranzbereich gleich sind, ist der Sensor funktionsfähig und eine Massenstrommessung kann durchgeführt werden. Dafür wird der elektrische Widerstand (R2) im Heizmodus betrieben, d.h. der Strompfad wird durch den niederohmigen Vorwiderstand (R9), der erheblich kleiner ist als der hochohmige Widerstand (R6), durch Umschalten mittels Schalter (5) geleitet. Das führt zu einem größeren Strom durch den Widerstand (R2) und somit zu einer stärkeren Eigenerwärmung.

Ausführungsbeispiel 2

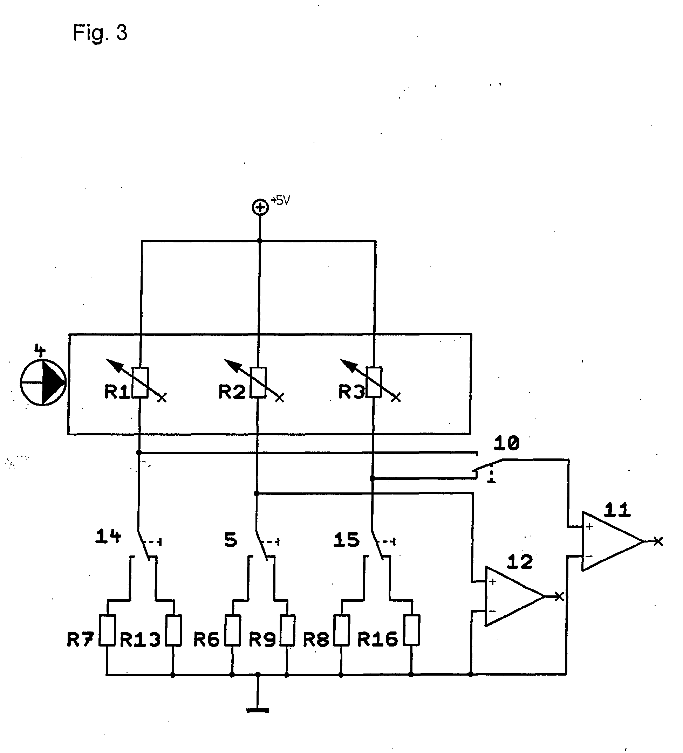

Figur 3 zeigt eine mögliche Erweiterung des in Figur 1 dargestellten und oben beschriebenen Massenstromsensors. Die Erweiterung bezieht sich auf die elektrischen Widerstände (R1) und (R3). Wie aus Figur 3 ersichtlich, sind die Widerstände (R1, R3) auch beheizbar ausgebildet und somit analog des Widerstandes (R2) zwischen einem Heiz- und einem Temperaturmessmodus umschaltbar. Dadurch ist es möglich, den Massenstrom redundant innerhalb eines Sensors zu messen. Die Messung des Massenstroms wird im Folgenden erläutert.

Zunächst erfolgt die bereits beim ersten Ausführungsbeispiel beschriebene Temperaturberechnung der an den Widerständen (R1, R2, R3) gemessenen Temperaturen (T1, T2, T3).

Das Gebläse des Heizgerätes wird angeschaltet und die Drehzahl vorzugsweise konstant gehalten. Das arithmetische Mittel ($T_I$) der drei errechneten Temperaturen wird bestimmt. Diese Temperatur entspricht der Temperatur des strömenden Gases (Luft).

In einem nächsten Schritt wird der Widerstand (R1) mittels Bewegung des Schalters (14) in Stellung 1 im Heizmodus betrieben. Die Temperatur ($T_{II}$) am Widerstand (R2) wird nach Gleichung 4 errechnet.

Danach wird die Temperaturdifferenz $\Delta T = T_{II} - T_1$ berechnet. Unter Berücksichtigung der eingebrachten Leistung (Q) am Widerstand (R1) kann nun auf den Massenstrom ($\dot{m}_1$) geschlossen werden.

Im nächsten Schritt wird der Widerstand (R1) durch Umschalten des Schalters (14) in Stellung 3 in den Messmodus geschaltet.

Der Widerstand (R2) wird durch Umschalten des Schalters (5) in den Heizbetrieb versetzt. Die Temperatur ($T_{III}$) am Widerstand (R3) wird ermittelt. Es folgt die Ermittlung der Temperaturdifferenz $\Delta T = T_{III} - T_I$. Unter Berücksichtigung der eingebrachten Leistung (Q) am Widerstand (R2) kann nun auf den Massenstrom ($\dot{m}_2$) geschlossen werden.

Die ermittelten Massenströme ($\dot{m}_1$) und ($\dot{m}_2$) werden miteinander verglichen. Nur wenn beide Massenströme unter Berücksichtigung einer Toleranz gleich sind, ist sichergestellt, dass z.B. keine Ablagerungen an der Oberfläche zwischen den drei Widerständen bestehen.

Der Widerstand (R3) kann ebenfalls beheizt werden, z.B. für den Fall, dass das strömende Fluid in die entgegengesetzte Strömungsrichtung (also von R3 zu R1) strömt. Dann wird der Massenstrom ($\dot{m}_3$) zwischen den Widerständen (R3) und (R2) sowie der Massenstrom ($\dot{m}_2$) zwischen den Widerständen (R2) und (R1) gemessen. Zuvor ist es jedoch erforderlich, die Strömungsrichtung zu bestimmen, indem nur der Widerstand (R3) im Heizbetrieb arbeitet. Wenn die Temperatur am Widerstand (R1) höher ist als die Temperatur am Widerstand (R3), dann strömt das Brenngas von rechts nach links. Somit ist die Strömungsrichtung bestimmt.

Ausführungsbeispiel 3

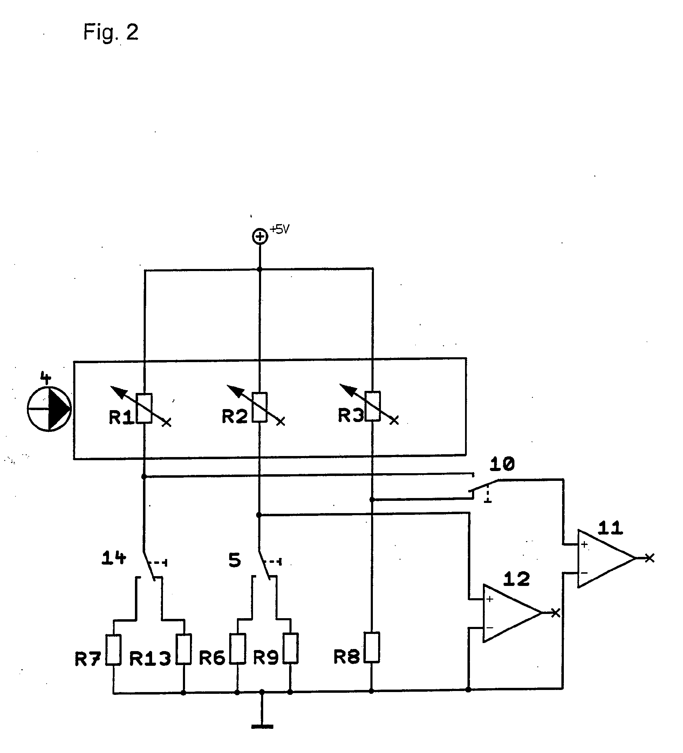

In diesem Ausführungsbeispiel, das der Figur 2 entnommen werden kann, wurde auf die Möglichkeit verzichtet, den Widerstand (R3) beheizbar zu machen. Für eine Anwendung bei einer gleich bleibenden Strömungsrichtung könnte eine solche Konfiguration ausreichen, um eine sicherheitsrelevante Verwendung des Sensors in einem Heizgerät zu gewährleisten.

Vorteilhaft bei dem erfindungsgemäßen Verfahren zur Funktionsüberprüfung des Sensors ist, dass die Temperatur des am Sensor vorbeiströmenden Mediums über eine einfache Umrechnung in Abhängigkeit der angelegten Spannung und Widerstände ermittelt werden kann. Für eine ausreichende Signalqualität sorgen hierbei die vorgesehenen Operationsverstärker (11, 12).

Die Erfindung ermöglicht einen Funktionstest über die Ansteuerung eines Massenstromsensors sowohl für den Fall eines strömenden Mediums durch den Sensor, als auch für den Fall eines ruhenden bzw. stehenden Mediums im Sensor. Bisher war es nicht ohne weiteres möglich, einen Massenstromsensor ähnlicher Bauart auf Plausibilität zu überprüfen, ohne den Sensor redundant anzulegen.

Das beschriebene Funktionsüberprüfungsverfahren ermöglicht sowohl die Detektierung von fehlerhaften Bauteilen als auch die Erkennung eines (z. B. durch Verschmutzung oder Ablagerungen zwischen den Elementen) verfälschten Wärmeübergangs, welche jeweils eine Fehlfunktion des Massenstromsensors herbeiführen würden.

Die Erfindung liefert somit eine Möglichkeit der Sensorüberprüfung und des Sensorbetriebs ohne große konstruktive Änderungen oder Ergänzungen zu handelsüblichen Strömungssensoren (Massenstromsensoren) ähnlicher Bauart, die mit zusätzlichen Kosten verbunden sind.

## Patentansprüche

1. Strömungssensor mit drei im Strömungsweg parallel geschalteten elektrischen Widerständen (R1, R2, R3), welche über einen negativen oder positiven Gradienten verfügen (PTC, NTC), wobei jedem der drei elektrischen Widerstände (R1, R2, R3) jeweils mindestens ein elektrischer Vorwiderstand (R6, R7, R8, R9) seriell vorgeschaltet ist, **dadurch gekennzeichnet dass** der mittlere elektrische Widerstand (R2) über eine Schaltvorrichtung (5) mit zwei Vorwiderständen (R6, R9) wechselseitig verbunden ist, wobei der eine Vorwiderstand (R6) hochohmig ist, so dass im Fall des zugeschalteten hochohmigen Vorwiderstand (R6) der Strom durch den elektrischen Widerstand (R2) so klein wird, dass von einer vernachlässigbaren Erwärmung des elektrischen Widerstands (R2) auszugehen ist, und der andere Vorwiderstand (R9) niederohmig ist, so dass der elektrische Widerstand (R2) im Fall des zugeschalteten niederohmigen Vorwiderstand (R9) auch erhitzt werden kann, und Vorrichtungen zur Erfassung des Spannungsabfalls an den Vorwiderständen vorgesehen sind.

2. Strömungssensor nach Anspruch 1, **dadurch gekennzeichnet dass** die den elektrischen Widerständen (R1, R2, R3) vorgeschaltete Vorwiderstände (R6, R7, R8, R9) unterschiedliche elektrische Widerstände aufweisen.

3. Strömungssensor nach Anspruch 1 oder 2, **dadurch gekennzeichnet dass** der erste und/oder der letzte elektrische Widerstand (R1, R3) im Strömungsweg über eine Schaltvorrichtung (14, 15) mit einem hochohmigen Vorwiderstand (R7, R8) und einem niederohmigen Vorwiderstand (R13, R16) wechselseitig verbunden ist.

4. Verfahren zur Funktionsüberprüfung eines Strömungssensors nach einem der Ansprüche 1 bis 3 mit folgenden Verfahrensschritten:

   - alle Widerstände (R1, R2, R3) werden mit ihren zugehörigen hochohmigen Vorwiderständen (R6, R7, R8) in Reihe geschaltet wird,
   - die Temperatur an den elektrischen Widerständen (R1, R2, R3) wird in Abhängigkeit der angelegten Spannung zwischen den elektrischen Widerständen (R1, R2, R3) und den Vorwiderständen (R7, R6, R8) ermittelt,
   - die an den elektrischen Widerständen (R1, R2, R3) ermittelten Temperaturen (T1, T2, T3) werden zur Überprüfung des Sensorsignals verglichen und
   - beim Vorliegen unterschiedlicher Temperaturen an den elektrischen Widerständen (R1, R2, R3) wird ein Fehlersignal ausgegeben.

5. Verfahren zur Funktionsüberprüfung eines Strömungssensors nach Anspruch 4, **dadurch gekennzeichnet, dass** die Funktionsüberprüfung des Sensors im stationären Zustand eines stehenden Mediums oder im dynamischen Zustand eines vorbeiströmenden Mediums erfolgen kann.

6. Verfahren zur Funktionsüberprüfung eines Strömungssensors nach Anspruch 5, **dadurch gekennzeichnet, dass** als vorbeiströmendes Medium Brenngas, Verbrennungsluft oder Brenngas-Luft-Gemisch eingesetzt wird.

7. Verfahren zum Betrieb eines Strömungssensors nach Anspruch 3 mit folgenden Verfahrensschritten:

- an den elektrischen Widerständen (R1, R2, R3), die jeweils mit dem hochohmigen Vorwiderstand (R6, R7, R8) in Reihe geschaltet sind, wird die Temperatur $(T_I)$ ermittelt und hieraus ein Durchschnittswert bestimmt,
- der erste elektrische Widerstand (R1, R3) im Strömungsweg wird über die Schaltvorrichtung (14, 15) mit dem niederohmigen Vorwiderstand (R13, R16) in Reihe geschaltet und der mittlere elektrische Widerstand (R2) wird mit dem hochohmigen Vorwiderstand (R6) in Reihe geschaltet,
- die Temperatur $(T_{II})$ eines am Widerstand (R2) vorbeiströmenden Mediums wird in Abhängigkeit der angelegten Spannung zwischen dem elektrischen Widerstand (R2) und dem Vorwiderstand (R6) ermittelt,
- die Differenz der ermittelten Temperatur $(T_{II})$ und der vorbestimmten Temperatur $(T_I)$ des strömenden Mediums wird gebildet,
- der Massenstrom $\dot{m}_1$ wird in Abhängigkeit der am Widerstand (R1) eingebrachten Leistung (Q), der Temperaturdifferenz $(T_{II} - T_I)$ und der Wärmekapazität $(c_P)$, die vorgegeben wird, ermittelt.

8. Verfahren zum Betrieb eines Strömungssensors nach Anspruch 3 mit folgenden Verfahrensschritten:

- an den elektrischen Widerständen (R1, R2, R3), die jeweils mit dem hochohmigen Vorwiderstand (R6, R7, R8) in Reihe geschaltet sind, wird die Temperatur $(T_I)$ ermittelt und hieraus ein Durchschnittswert bestimmt,
- der erste elektrische Widerstand (R1, R3) im Strömungsweg wird über die Schaltvorrichtung (14, 15) mit dem hochohmigen Vorwiderstand (R7, R8) in Reihe geschaltet,
- der mittlere elektrische Widerstand (R2) wird über die Schaltvorrichtung (5) mit dem niederohmigen Vorwiderstand (R9) in Reihe geschaltet,
- die Temperatur $(T_{III})$ eines am Widerstand (R3) vorbeiströmenden Mediums wird in Abhängigkeit der angelegten Spannung zwischen dem elektrischen Widerstand (R3) und dem Vorwiderstand (R8) ermittelt,
- die Differenz der ermittelten Temperatur $(T_{III})$ und einer vorbestimmten Temperatur des strömenden Mediums $(T_I)$ wird gebildet,
- der Massenstrom $\dot{m}_2$ wird in Abhängigkeit der am Widerstand (R2) eingebrachten Leistung (Q), der Temperaturdifferenz $(T_{III} - T_I)$ und der Wärmekapazität $(c_P)$, die vorgegeben wird, ermittelt.

9. Verfahren zur Funktionsüberprüfung eines Strömungssensors nach den Ansprüchen 7 und 8 mit folgenden Verfahrensschritten

- die ermittelten Massenströme $(\dot{m}_1, \dot{m}_2)$ werden zur Überprüfung des Sensorsignals miteinander verglichen und
- beim Vorliegen unterschiedlicher Massenströme zwischen den elektrischen Widerständen (R1, R2) und (R2, R3) wird ein Fehlersignal ausgegeben.

**Claims**

1. Flow sensor with three electrical resistors (R1, R2, R3) connected in parallel in the flow path which have a negative or positive gradient (PTC, NTC), wherein at least one electrical resistor (R6, R7, R8, R9) is connected upstream of each of the three electrical resistors (R1, R2, R3), **characterised in that** the middle electrical resistor (R2) is mutually connected via a switching device (5) to two series resistors (R6, R9), wherein one series resistor (R6) is of high impedance, meaning that in case the high impedance resistor (R6) is connected, the current through the electrical resistor (R2) becomes so small that a negligible temperature increase of the electrical resistor (R2) is assumed, and the other series resistor (R9) is at low impedance, meaning that the electrical resistor (R2) can also be heated in case the low impedance resistor (R9) is connected, and **in that** devices for detecting the voltage drop at the series resistors are provided.

2. Flow sensor according to Claim 1, **characterised in that** the series resistors (R6, R7, R8, R9) connected upstream of the electrical resistors (R1, R2, R3) have different electrical resistances.

3. Flow sensor according to Claim 1 or 2, **characterised in that** the first and/or the last electrical resistor (R1, R3) in the flow path is mutually connected via a switching device (14, 15) to a high-impedance series resistor (R7, R8) and a low-impedance series resistor (R13, R16).

4. Method for functional checking of a flow sensor according to any one of Claims 1 to 3 comprising the following steps:

   - all resistors (R1, R2, R3) are connected in series with their associated high-impedance series resistors (R6, R7, R8),
   - the temperature at the electrical resistors (R1, R2, R3) is determined as a function of the voltage applied between the electrical resistors (R1, R2, R3) and the series resistors (R7, R6, R8),
   - the temperatures (T1, T2, T3) determined at the electrical resistors (R1, R2, R3) are compared to check the sensor signal and
   - if different temperatures are present at the electrical resistors (R1, R2, R3), an error signal is issued.

5. Method for functional checking of a flow sensor according to Claim 4, **characterised in that** the functional check of the sensor can be carried out in the stationary state of a stationary medium or in the dynamic state of a flowing medium.

6. Method for functional checking of a flow sensor according to Claim 5, **characterised in that** fuel gas, combustion air or fuel gas-air mixture is used as the flowing medium.

7. Method for operating a flow sensor according to Claim 3 comprising the following steps:

   - at the electrical resistors (R1, R2, R3), which are each connected in series to the high-impedance series resistor (R6, R7, R8), the temperature ($T_I$) is calculated and an average value determined based on this,
   - the first electrical resistor (R1, R3) in the flow path is connected in series via the switching device (14, 15) to the low-impedance series resistor (R13, R16) and the middle electrical resistor (R2) is connected in series to the high-impedance series resistor (R6),
   - the temperature ($T_{II}$) of a flowing medium at the resistor (R2) is determined as a function of the voltage applied between the electrical resistor (R2) and the series resistor (R6),
   - the difference is formed between the determined temperature ($T_{II}$) and the predefined temperature ($T_I$) of the flowing medium,
   - the mass flow $\dot{m}_1$ is determined as a function of the power supplied (Q) at the resistor (R1), the temperature difference ($T_{II} - T_I$) and the heat capacity ($c_P$), which is predefined.

8. Method for operating a flow sensor according to Claim 3 comprising the following steps:

   - at the electrical resistors (R1, R2, R3), which are each connected in series to the high-impedance series resistor (R6, R7, R8), the temperature ($T_I$) is calculated and an average value determined based on this,
   - the first electrical resistor (R1, R3) in the flow path is connected in series via the switching device (14, 15) to the high-impedance series resistor (R7, R8),
   - the middle electrical resistor (R2) is connected in series via the switching device (5) to the low-impedance series resistor (R9),
   - the temperature ($T_{III}$) of a flowing medium at the resistor (R3) is determined as a function of the voltage applied between the electrical resistor (R3) and the series resistor (R8),
   - the difference is formed between the determined temperature ($T_{III}$) and a predefined temperature of the flowing medium ($T_I$),
   - the mass flow $\dot{m}_2$ is determined as a function of the power supplied (Q) at the resistor (R2), the temperature difference ($T_{III} - T_I$) and the heat capacity ($c_P$), which is predefined.

9. Method for functional checking of a flow sensor according to Claims 7 and 8 comprising the following steps

   - the determined mass flows ($\dot{m}_1$, $\dot{m}_2$) are compared to check the sensor signal and
   - if different mass flows are present between the electrical resistors (R1, R2) and (R2, R3), an error signal is issued.

**Revendications**

1. Capteur d'écoulement comprenant trois résistances (R1, R2, R3) électriques branchées en parallèle sur le chemin d'écoulement, lesquelles disposent d'un gradient négatif ou positif (PTC, NTC), dans lequel respectivement au moins une résistance série (R6, R7, R8, R9) électrique est branchée en série en amont de chacune des trois résistances (R1, R2, R3) électriques, **caractérisé en ce que** la résistance (R2) électrique moyenne est reliée en alternance, par l'intermédiaire d'un dispositif de branchement (5), à deux résistances séries (R6, R9), dans lequel l'une des résistances séries (R6) présente une valeur ohmique élevée de sorte que, si la résistance série (R6) à valeur ohmique élevée est mise sous tension, le courant à travers la résistance (R2) électrique soit si faible qu'il faut commencer par un réchauffement négligeable de la résistance (R2) électrique et l'autre résistance série (R9) présente une valeur ohmique faible de sorte que la résistance (R2) électrique puisse également être réchauffée si la résistance série (R9) à faible valeur ohmique est mise sous tension, et des dispositifs servant à détecter la baisse de tension au niveau des résistances séries sont prévus.

2. Capteur d'écoulement selon la revendication 1, **caractérisé en ce que** les résistances séries (R6, R7, R8, R9) branchées en amont des résistances (R1, R2, R3) électriques présentent différentes résistances électriques.

3. Capteur d'écoulement selon la revendication 1 ou 2, **caractérisé en ce que** la première et/ou la dernière résistance (R1, R3) électrique sont reliées en alternance, sur le chemin d'écoulement, par l'intermédiaire d'un dispositif de branchement (14, 15), à une résistance série (R7, R8) à valeur ohmique élevée et à une résistance série (R13, R16) à faible valeur ohmique.

4. Procédé servant à surveiller le fonctionnement d'un capteur d'écoulement selon l'une quelconque des revendications 1 à 3, comprenant les étapes de procédé suivantes :

   - toutes les résistances (R1, R2, R3) sont branchées en série avec leurs résistances séries (R6, R7, R8) à valeur ohmique élevée associées,
   - la température au niveau des résistances (R1, R2, R3) électriques est déterminée en fonction de la tension appliquée entre les résistances (R1, R2, R3) électriques et les résistances séries (R7, R6, R8),
   - les températures (T1, T2, T3) déterminées au niveau des résistances (R1, R2, R3) électriques sont comparées afin de surveiller le signal de capteur, et
   - un signal d'erreur est émis en présence de températures différentes au niveau des résistances (R1, R2, R3) électriques.

5. Procédé servant à surveiller le fonctionnement d'un capteur d'écoulement selon la revendication 4, **caractérisé en ce que** la surveillance de fonctionnement du capteur peut être effectuée dans l'état stationnaire d'un milieu stagnant ou dans l'état dynamique d'un milieu circulant.

6. Procédé servant à surveiller le fonctionnement d'un capteur d'écoulement selon la revendication 5, **caractérisé en ce que** du gaz combustible, de l'air de combustion ou un mélange de gaz combustible et d'air sont utilisés en tant que milieu circulant.

7. Procédé servant à faire fonctionner un capteur d'écoulement selon la revendication 3, comprenant les étapes de procédé suivantes :

   - la température ($T_I$) est déterminée au niveau des résistances (R1, R2, R3) électriques, qui sont branchées en série respectivement avec la résistance série (R6, R7, R8) à valeur ohmique élevée, et une valeur moyenne en est déduite,
   - la première résistance (R1, R3) électrique sur le chemin d'écoulement est branchée en série, par l'intermédiaire du dispositif de branchement (14, 15), avec la résistance série (R13, R16) à faible valeur ohmique et la résistance (R2) électrique moyenne est branchée en série avec la résistance série (R6) à valeur ohmique élevée,
   - la température ($T_{II}$) d'un milieu circulant le long de la résistance (R2) est déterminée en fonction de la tension appliquée entre la résistance (R2) électrique et la résistance série (R6),
   - la différence de la température ($T_{II}$) déterminée et de la température ($T_I$) prédéfinie du milieu en écoulement est obtenue,
   - le flux massique $\dot{m}_1$ est déterminé en fonction de la puissance (Q) introduite au niveau de la résistance (R1), de la différence de température ($T_{II} - T_I$) et de la capacité thermique ($C_P$), qui est spécifiée.

8. Procédé servant à faire fonctionner un capteur d'écoulement selon la revendication 3, comprenant les étapes de procédé suivantes :

   - la température ($T_I$) est déterminée au niveau des résistances (R1, R2, R3) électriques, qui sont branchées en série respectivement avec la résistance série (R6, R7, R8) à valeur ohmique élevée, et une valeur moyenne en est déduite,

- la première résistance (R1, R3) électrique sur le chemin d'écoulement est branchée en série, par l'intermédiaire du dispositif de branchement (14, 15), avec la résistance série (R7, R8) à valeur ohmique élevée,
- la résistance (R2) électrique moyenne est branchée en série, par l'intermédiaire du dispositif de branchement (5), avec la résistance série (R9) à faible valeur ohmique,
- la température ($T_{III}$) d'un milieu circulant le long de la résistance (R3) est déterminée en fonction de la tension appliquée entre la résistance (R3) électrique et la résistance série (R8) ;
- la différence de la température ($T_{III}$) déterminée et une température prédéfinie du milieu ($T_I$) en écoulement est obtenue,
- le flux massique $\dot{m}_2$ est déterminé en fonction de la puissance (Q) introduite au niveau de la résistance (R2), de la différence de température ($T_{III}$ - $T_I$) et de la capacité thermique ($C_P$), qui est spécifiée.

9. Procédé servant à surveiller le fonctionnement d'un capteur d'écoulement selon les revendications 7 et 8, comprenant les étapes de procédé suivantes

- les flux massiques ($\dot{m}_1$, $\dot{m}_2$) déterminés sont comparés les uns aux autres afin de surveiller le signal de capteur et
- un signal d'erreur est émis en présence de différents flux massiques entre les résistances (R1, R2) et (R2, R3) électriques.

Fig. 1

Fig. 2

Fig. 3

**EP 1 918 682 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060005619 A1

- EP 1207347 B1